# EUROPÄISCHE PATENTANMELDUNG

(11) **EP 1 906 273 A1**
(43) Veröffentlichungstag der Anmeldung: **02.04.2008**
(21) Anmeldenummer: 06020612.5
(22) Anmeldetag: 29.09.2006
(51) Int. Cl.: G05B 19/042, G07C 3/00

(54) **Verfahren zum Betreiben einer grosstechnischen Anlage sowie Leitsystem für eine grosstechnische Anlage**

(71) Anmelder: SIEMENS AKTIENGESELLSCHAFT, 80333 München (DE)
(72) Erfinder: Kunze, Ulrich Dr., 91088 Bubenreuth (DE); Römpke, Arno, 91077 Neunkirchen A.Br. (DE)

(57) **Zusammenfassung**

Ein Verfahren zum Betreiben einer großtechnischen Anlage, insbesondere einer Kraftwerksanlage, bei dem eine Anzahl von für den jeweiligen Betriebszustand der technischen Anlage charakteristischen Anlagenbetriebsparametern und für eine Anzahl ausgewählter Komponenten der technischen Anlage jeweils eine Anzahl von für die jeweilige Komponente relevanten Komponentenbetriebsparametern überwacht und in einer Speichereinrichtung (2) hinterlegt werden, wobei für die oder jede ausgewählte Komponente bedarfsweise anhand der gespeicherten Anlagenbetriebsparameter und/oder der gespeicherten zugeordneten Komponentenbetriebsparameter ein für den aktuellen Ermüdungszustand der jeweiligen Komponente charakteristischer Ermüdungskennwert ermittelt wird, soll einen besonders ressourcenschonenden Anlagenbetrieb besonders begünstigen. Dazu ist erfindungsgemäß vorgesehen, dass ausgehend vom für den aktuellen Ermüdungszustand charakteristischen Ermüdungskennwert für die oder jede ausgewählte Komponente unter Zugrundelegung von für einen vorgesehenen Zustandswechsel charakteristischen Führungsparametern jeweils ein zugeordneter Ermüdungs-Prognosewert ermittelt wird.

## Beschreibung

Die Erfindung bezieht sich auf ein Verfahren zum Betreiben einer großtechnischen Anlage, insbesondere einer Kraftwerksanlage, bei dem eine Anzahl von für den jeweiligen Betriebszustand der technischen Anlage charakteristischen Anlagenbetriebsparametern und für eine Anzahl ausgewählter Komponenten der technischen Anlage jeweils eine Anzahl von für die jeweilige Komponente relevanten Komponentenbetriebsparametern überwacht und in einer Speichereinrichtung hinterlegt werden, wobei für die oder jede ausgewählte Komponente bedarfsweise anhand der gespeicherten Anlagenbetriebsparameter und/oder gespeicherten zugeordneten Komponentenbetriebsparameter ein für den aktuellen Ermüdungszustand der jeweiligen Komponente charakteristischer Ermüdungskennwert ermittelt wird. Sie betrifft weiterhin ein Leitsystem für eine großtechnische Anlage, insbesondere eine Kraftwerksanlage, das hinsichtlich seiner Komponenten wie beispielsweise Speichereinrichtungen, Auswerteeinheiten und dergleichen für die Ermittlung von Ermüdungswerten für die Anlagenkomponenten geeignet ausgelegt und somit zur Durchführung des genannten Verfahrens geeignet ist.

In der Industrie sind in den verschiedensten Bereichen technische oder großtechnische Anlagen anzutreffen, die beispielsweise zur Herstellung eines bestimmten Erzeugnisses, zur Weiterverarbeitung oder Veredelung von Rohstoffen, zur automatisierten Durchführung von ehemals manuellen Tätigkeiten oder zur Erzeugung von insbesondere elektrischer Energie verwendet werden. Fertige großtechnische Anlagen wie insbesondere Kraftwerksanlagen bestehen im Allgemeinen aus einer Vielzahl von Anlagenkomponenten, die die einzelnen Funktionen der jeweiligen großtechnischen Anlage realisieren. Viele dieser Anlagenkomponenten unterliegen während ihrer Betriebsdauer einem mechanischen oder betriebsbedingten Verschleiß. Während der Lebensdauer der technischen Anlage stellt der Verschleiß der Anlagenkomponenten bereits während der Auslegung der Anlage einen bedeutsamen Aspekt dar, da bei Überschreiten einer Verschleißgrenze die Funktion der technischen Anlage oder zumindest der betroffenen Komponente nicht mehr gewährleistet ist.

Insbesondere in Kraftwerksanlagen sind zudem Bauteile oder Anlagenkomponenten wie beispielsweise Kessel, Dampferzeuger, Sammler, Rohrleitungen wechselnden mechanischen Spannungen aufgrund von Änderungen ihrer Umgebungsparameter wie beispielsweise Druck und Temperatur unterworfen. Diese wechselnden Belastungen, auch als Lastwechsel der Kraftwerksanlage bezeichnet, die üblicherweise mit einem Zustandswechsel der Kraftwerksanlage wie beispielsweise einer Leistungserhöhung oder -absenkung einhergehen, führen in der Regel zu möglicherweise beträchtlicher Materialbeanspruchung der betroffenen Komponente und zur so genannten Bauteilermüdung, die oberhalb einer gewissen Grenze auch zum Bauteilversagen führen kann. Insbesondere ist durch eine derartige Ermüdung die betriebliche Lebensdauer oder maximal zulässige Betriebsdauer der jeweiligen Kraftwerkskomponente oder Anlagenkomponente begrenzt. Aus diesen Gründen wird die Bauteilermüdung ausgewählter Anlagenkomponenten bei der Planung einer großtechnischen Anlage und auch bei der Planung der Reparatur- und Wartungszyklen bereits berücksichtigt, um gegebenenfalls rechtzeitig vor einem Bauteilversagen einen Austausch der jeweiligen Komponente gewährleisten zu können.

Für eine geeignete Berücksichtigung derartiger Ermüdungserscheinungen bei der Anlagenplanung werden üblicherweise während der Konstruktion oder Auslegung von Kraftwerksbauteilen zur Gewährleistung einer Mindestlebensdauer der jeweiligen Komponenten oder Bauteile ein vordefiniertes, aus einer begrenzten Anzahl von Typen von Lastwechseln bestehendes Lastkollektiv unterstellt, das beispielsweise eine vorgegebene Anzahl von Heißstarts, Warmstarts und Kaltstarts mit jeweils vordefinierten Fahrweisen der Kraftwerksanlage umfasst.

Für diese standardisierten Typen von Lastwechseln werden dann pro Lastwechseltyp die jeweiligen Ermüdungsbeiträge in den betroffenen Komponenten ermittelt, wobei üblicherweise vergleichsweise aufwendige Rechenverfahren wie beispielsweise Finite-Elemente-Rechnungen eingesetzt werden. Unter Berücksichtigung der dabei erhaltenen Ergebnisse erfolgt die Auslegung der jeweiligen Anlagenkomponente in der Regel dann derart, dass die aus den einzelnen Ermüdungsbeiträgen und der Anzahl der unterstellten Lastwechsel pro Typ ermittelte Gesamtermüdung des jeweiligen Bauteils oder der jeweiligen Komponente einen vorgegebenen Grenzwert einer noch als zulässig erachteten Ermüdung nicht überschreitet.

Mit einer derartigen Berücksichtigung der Materialermüdung in den einzelnen Bauteilen oder Komponenten ist das tatsächliche Komponentenverhalten jedoch nicht in ausreichendem Maße prognostizierbar. Insbesondere ist üblicherweise die reale Betriebsweise einer großtechnischen Anlage oder insbesondere einer Kraftwerksanlage flexibler und variabler als während der Auslegung angenommen, da die Betriebsweise der Kraftwerksanlage beispielsweise aktuellen Lastanforderungen oder dergleichen angepasst werden muss. Um daher die tatsächlich aufgetretene Ermüdung bei der Wartungs- und Revisionsplanung von Kraftwerksanlagen geeignet berücksichtigen zu können, wird in Kraftwerksanlagen oder anderen großtechnischen Anlagen üblicherweise die jeweilige Bauteilermüdung ausgewählter Anlagenkomponenten überwacht. Da sich dabei die Bauteilermüdung in der Regel nicht direkt messen lässt, werden üblicherweise entsprechende Druck- und Temperaturkennwerte zur Charakterisierung der jeweiligen Umgebungsbedingungen der jeweiligen Komponente gemessen und überwacht, aus denen anschließend die durch die Druck- und Temperaturänderungen verursachten wechselnden Spannungen in der jeweiligen Komponente errechnet werden. Die dabei erhaltenen Istwerte für die Spannungen in den Komponenten werden sodann in Lastwechselzyklen zusammengefasst, wobei Höhe und Anzahl der jeweiligen Lastwechsel mit bekannten Grenzwerten verglichen werden. Als Ergebnis wird schließlich ein für die Ermüdung des jeweiligen Bauteils oder der jeweiligen Komponente charakteristischer Kennwert, ein so genannter Ermüdungskennwert, ermittelt, der beispielsweise einen prozentualen Anteil der Bauteillebensdauer spezifizieren kann. Mit derartigen Konzepten kann für die ausgewählten Kraftwerks- oder Anlagenkomponenten die über ihren gesamten betrieblichen Einsatz hinweg bislang eingetretene Ermüdung ermittelt und bei der Wartungs- und Revisionsplanung berücksichtigt werden. Entsprechende Konzepte sind beispielsweise in der DIN EN 12952-4:2001-10 "Wasserrohrkessel und Anlagenkomponenten, Teil 4: Betriebsbegleitende Berechnung der Lebensdauererwartung, deutsche Fassung EN 12952-4:2000" erfasst.

Allerdings ist beim Betrieb derartiger großtechnischer Anlagen wie insbesondere Kraftwerksanlagen aus Sicherheitsgründen zwar einerseits zwingend darauf zu achten, dass eine Wartung und gegebenenfalls ein Austausch verschleißender oder von Ermüdung betroffener Komponenten oder Bauteile in jedem Fall rechtzeitig vor dem Ausfall oder dem Versagen der jeweiligen Komponente vorgenommen wird. Andererseits besteht aber das Bestreben, derartige Wartungs- oder Reparatureingriffe in die großtechnische Anlage zur Vermeidung unnötiger Anlagenstillstandszeiten und für eine besonders wirtschaftliche Betriebsweise besonders bedarfsgerecht vorzunehmen, so dass Bauteile tatsächlich auch erst dann ausgetauscht werden, wenn sie nur noch eine vergleichsweise geringe Restlebensdauer haben. Zudem sollte für einen besonders effektiven und wirtschaftlichen Anlagenbetrieb die Fahrweise der jeweiligen Anlage derart ressourcenschonend gewählt werden, dass Verschleiß und Ermüdung in Komponenten und Bauteilen möglichst gering gehalten werden.

Der Erfindung liegt daher die Aufgabe zugrunde, ein Verfahren zum Betreiben einer großtechnischen Anlage der oben genannten Art, bei dem charakteristische Ermüdungskennwerte für ausgewählte Anlagenkomponenten ermittelt werden, derart weiterzubilden, dass unter Einhaltung vorgegebener Sicherheitsstandards eine besonders lange betriebliche Lebensdauer einzelner Bauteile oder Komponenten besonders begünstigt und eine besonders bedarfsgerechte Revisions- und Wartungsplanung ermöglicht wird. Außerdem soll ein für die Durchführung des Verfahrens besonders geeignetes Leitsystem für eine großtechnische Anlage angegeben werden.

Bezüglich des Verfahrens wird diese Aufgabe erfindungsgemäß dadurch gelöst, dass ausgehend vom für den aktuellen Ermüdungszustand charakteristischen Ermüdungskennwert für die oder jede ausgewählte Komponente unter Zugrundelegung von für einen vorgesehenen Zustandswechsel charakteristischen Führungsparametern jeweils ein zugeordneter Ermüdungs-Prognosewert ermittelt wird.

Die Erfindung geht dabei von der Überlegung aus, dass für eine besonders ressourcenschonende und damit die Lebensdauer der eingesetzten Komponenten oder Bauteile begünstigende Betriebsweise der großtechnischen Anlage oder Kraftwerksanlage die ermittelten Ermüdungskennwerte über eine reine Bauteildiagnose hinaus aktiv für die Betriebsweise der Anlage herangezogen werden sollten. Dazu sollte ausgehend vom ermittelten Istwert für die aktuelle Ermüdung der jeweiligen Komponente oder des jeweiligen Bauteils in der Art einer Extrapolation unter Berücksichtigung der vorgesehenen Anlagenfahrweise ein Prognosewert für die Bauteilermüdung erstellt werden, der beispielsweise als Hilfsgröße für die Bedarfsermittlung von Reparatur- oder Wartungseingriffen genutzt werden kann. Ein derartiger Zustandswechsel ist dabei insbesondere ein Lastwechsel eines Kraftwerks und kann insbesondere ein Abfahr-oder besonders auch ein Anfahrvorgang der Kraftwerksanlage sein.

Als Betriebsparameter, die zur Ermittlung der jeweiligen Ermüdungskennwerte berücksichtigt werden sollten, sind dabei vorzugsweise einerseits komponentenspezifische Betriebsparameter oder Komponentenbetriebsparameter vorgesehen, die vorteilhafterweise Kennwerte für Umgebungsdruck, Umgebungstemperatur und/oder Umgebungsfeuchte der jeweiligen Komponente oder des jeweiligen Bauteils umfassen. Alternativ oder zusätzlich werden vorteilhafterweise für den Zustand der großtechnischen Anlage oder Kraftwerksanlage insgesamt relevante oder charakteristische Betriebsparameter oder Anlagenbetriebsparameter erfasst und ausgewertet, die vorteilhafterweise Kennwerte für einen Anlagenschaltungszustand und/oder eine Sollleistung umfassen. Aus der Gesamtheit dieser Parameter können sodann die auf die jeweilige Komponente oder das jeweilige Bauteil lokal einwirkenden Druck- und Temperaturwerte ermittelt werden, die letztlich die mechanischen Spannungen und somit die daraus resultierende Ermüdung im Bauteil induzieren.

Um dabei besonders zuverlässige Kennwerte für die Bauteilermüdung ermitteln zu können, werden in weiterer vorteilhafter Ausgestaltung bei der Ermittlung des jeweiligen Ermüdungskennwerts und/oder des jeweiligen Ermüdungs-Prognosewerts für die jeweilige Komponente charakteristische Komponentenparameter berücksichtigt. Als Komponentenparameter sind dabei insbesondere vorteilhafterweise Werkstoffdaten, geometrische Abmessungen und/oder die für die Ermüdungsberechnung maßgeblichen Druck- und Temperaturmessstellen in der jeweiligen Komponente vorgesehen.

Aufgrund der Komplexität der zur Ermüdung führenden grundlegenden Prozesse ist üblicherweise unter Rückgriff auf bereitstellbare Ressourcen eine geschlossene Berechnung exakter Kennwerte oder Parameter nicht möglich oder nicht praktikabel. Um aber auch unter Rückgriff auf nur begrenzte Rechnerkapazitäten besonders zuverlässige Kennwerte oder Parameter bereitstellen zu können, werden vorteilhafterweise zur Ermittlung des jeweiligen Ermüdungs-Prognosewerts Trendverläufe für Temperatur- und/oder Druckwerte innerhalb der jeweiligen Komponente berücksichtigt. Die Trendverläufe werden dabei vorteilhafterweise aus einer thermodynamischen Simulation der Anlage bestimmt, wobei bedarfsweise ein Rückgriff auf hinterlegtes Erfahrungswissen oder bereitgehaltene Erfahrungswerte erfolgen kann.

Um den Ermittlungs- und Bearbeitungsaufwand besonders gering zu halten und somit auf besonders effektive Weise die Anlagendiagnose und -führung zu erleichtern, wird in zusätzlicher oder alternativer vorteilhafter Ausgestaltung gezielt der Erkenntnis Rechnung getragen, dass ein verschleißbedingter oder ermüdungsbedingter Ausfall von Komponenten oder Bauteilen in der Regel zuerst und ausschließlich bei der von Verschleiß oder Ermüdung am meisten betroffenen Komponente auftreten wird. Die Berücksichtigung des Verschleiß- oder Ermüdungszustands der jeweiligen Komponente bei der Wartungs- und Reparaturplanung kann somit besonders wirkungsvoll vorgenommen werden, indem die entsprechenden Auswertungen auf die erwartungsgemäß von Ermüdung,und Verschleiß am meisten betroffene Komponente konzentriert werden. Um dies zu ermöglichen, wird vorteilhafterweise diejenige Komponente oder dasjenige Bauteil als so genannte "führende Komponente" für die primäre Berücksichtigung bei der Anlagenprognose identifiziert, die den größten ermittelten Ermüdungs-Prognosewert sämtlicher ausgewerteter Komponenten aufweist. Vorteilhafterweise wird dieser Ermüdungs-Prognosewert der führenden Komponente als Kriterium für die Einleitung von Reparatur- oder Wartungsmaßnahmen verwendet.

In besonders vorteilhafter Ausgestaltung wird die gezielte Auswertung der Ermüdungszustände der Bauteile oder Komponenten nicht nur für eine bedarfsgerechte Reparatur- oder Wartungsplanung, sondern auch für eine Optimierung der Betriebsweise der großtechnischen Anlage im Sinne einer besonders ressourcenschonenden und lebensdauerverlängernden Betriebsweise herangezogen. Dazu werden vorteilhafterweise ausgehend vom aktuellen Anlagenzustand in der Art einer Szenarioplanung verschiedenartige Zustands- oder Lastwechselszenarien analysiert, mit denen die Anlage in der nächsten Zukunft weiter betreibbar wäre. Beispielsweise kann dabei ausgehend vom aktuellen Istzustand einer Kraftwerksanlage eine vergleichsweise schnelle, kurzfristige Leistungssteigerung mit einer vergleichsweise langsam angelegten, kontinuierlichen Leistungssteigerung verglichen werden. Für derartige alternativ vorgesehene Zustandswechsel werden sodann vorteilhafterweise jeweils Ermüdungs-Prognosewerte ermittelt und miteinander verglichen, wobei anhand dieses Vergleichs derjenige der möglichen Zustandswechsel oder Lastwechselvorgänge ausgewählt wird, der zu der durch den geringsten Ermüdungs-Prognosewert gekennzeichneten geringsten Anlagenbelastung führt. Der Vergleich zwischen verschiedenen möglichen Zustands- oder Lastwechseln kann dabei anhand des Ermüdungs-Prognosewerts der jeweils führenden Komponente oder auch anhand eines Satzes von Ermüdungs-Prognosewerten für eine Mehrzahl betroffener Komponenten erfolgen.

Bezüglich des Leitsystems für eine großtechnische Anlage, insbesondere eine Kraftwerksanlage, mit einer Speichereinrichtung, in der eine Anzahl von für den jeweiligen Betriebszustand der technischen Anlage charakteristischen Anlagenbetriebsparametern und eine Anzahl von für eine Anzahl ausgewählter Komponenten der technischen Anlage relevanten Komponentenbetriebsparametern hinterlegt werden, und die datenseitig mit einer Auswerteeinheit verbunden ist, die für die bedarfsweise Ermittlung jeweils eines für den aktuellen Ermüdungszustand der oder jeder ausgewählten Komponente charakteristischen Ermüdungskennwerts anhand der gespeicherten Anlagenbetriebsparameter und/oder der gespeicherten zugeordneten Komponentenbetriebsparameter ausgelegt ist, wird die genannte Aufgabe dadurch gelöst, dass die Auswerteeinheit für die oder jede ausgewählte Komponente für eine Ermittlung eines zugeordneten Ermüdungs-Prognosewerts ausgehend vom für den aktuellen Ermüdungszustand charakteristischen Ermüdungskennwert unter Zugrundelegung von für einen vorgesehenen Zustandswechsel charakteristischen Führungsparametern ausgelegt ist.

Zweckmäßigerweise ist dabei für eine besonders zuverlässige und genaue Auswertung in einer Speichereinheit ein thermodynamisches Modell der großtechnischen Anlage oder Kraftwerksanlage hinterlegt, anhand dessen Temperatur- und Druckbelastungen in einzelnen Komponenten oder Bauteilen besonders zuverlässig abschätzbar sind.

Die mit der Erfindung erzielten Vorteile bestehen insbesondere darin, dass durch die Heranziehung der Ermüdungsanalyse zur Bereitstellung von entsprechenden Prognosewerten eine besonders bedarfsgerechte Wartungs- und Revisionsplanung der großtechnischen Anlage ermöglicht oder besonders begünstigt ist. Des Weiteren können durch eine gezielte Auswertung von Ermüdungsbeiträgen oder erwarteten Ermüdungsbeiträgen in einzelnen Komponenten oder Bauteilen der großtechnischen Anlage diejenigen Lastwechsel oder Zustandswechsel ausgewählt werden, die im Hinblick auf extern vorgegebene Randbedingungen eine global gesehen besonders ressourcenschonende Betriebsweise der Anlage ermöglichen.

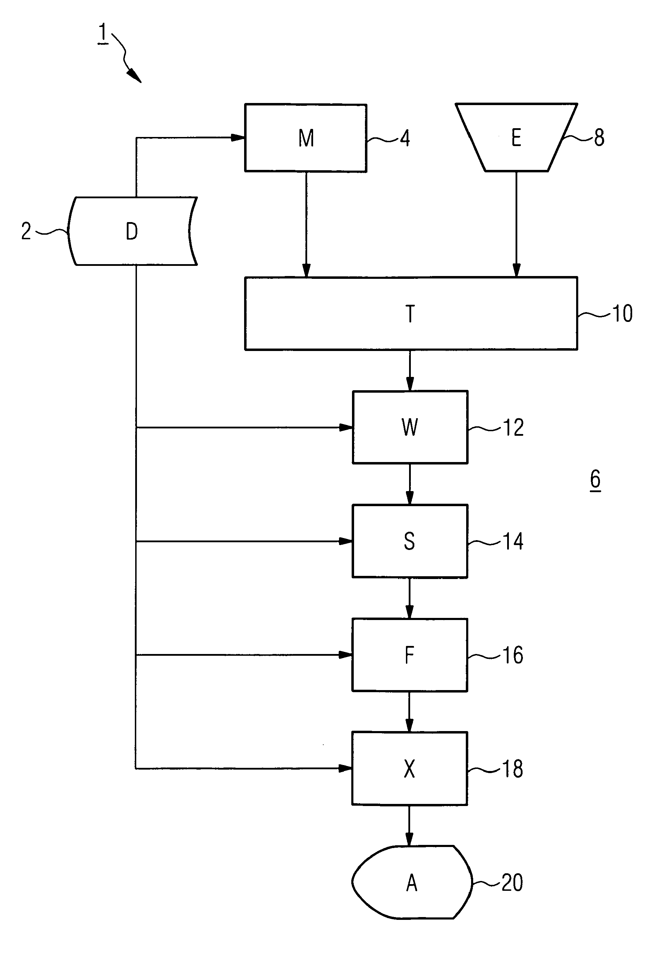

Ein Ausführungsbeispiel der Erfindung wird anhand einer Zeichnung näher erläutert. Darin zeigt die Figur schematisch ein Leitsystem für eine großtechnische Anlage, insbesondere eine Kraftwerksanlage.

Das schematisch dargestellte Leitsystem 1 umfasst dabei eine Vielzahl nicht näher dargestellter Module oder Komponenten, wie sie im Einsatz in großtechnischen Anlagen und insbesondere in Kraftwerksanlagen weit verbreitet und üblich sind. Insbesondere ist die Kraftwerksanlage mit einer Vielzahl von Messstellen oder Sensoren versehen, über die betriebsbegleitend Parameter von Komponenten und Bauteilen überwacht und gegebenenfalls archiviert werden. Unter diesen Sensoren und Messstellen sind eine Vielzahl von Sensoren und Messstellen enthalten, über die eine betriebsbegleitende Ermüdungsüberwachung einzelner Komponenten oder Bauteile der Kraftwerksanlage durchgeführt wird.

Dazu umfasst das Leitsystem 1 neben anderen Komponenten eine Speichereinrichtung 2, die gezielt für die Archivierung und Bereithaltung der im Rahmen der Ermüdungsüberwachung ermittelten Messwerte und Parameter ausgelegt ist. Insbesondere sind in der Speichereinrichtung 2 für die für die Ermüdungsüberwachung als besonders relevant ausgewählten Komponenten und Bauteile Komponentenparameter hinterlegt, wobei insbesondere jedem relevanten Bauteil oder jeder relevanten Komponente ein eigener Parametersatz zugeordnet ist, in dem Werkstoffdaten, geometrische Abmessungen und die für die Ermüdungsberechnung der jeweiligen Komponente maßgeblichen Druck-und Temperaturmessstellen oder die Positionierungsdaten hierzu enthalten sind. Des Weiteren werden in der Speichereinrichtung 2 bedarfsweise die überwachten Messwerte hinterlegt, wobei einerseits eine Anzahl von für den Betriebszustand der Kraftwerksanlage charakteristischen Anlagenbetriebsparametern wie beispielsweise Kennwerte für den Lastzustand, Solllasten oder dergleichen hinterlegt werden. Weiterhin werden für die ausgewählten Komponenten der Kraftwerksanlage auch noch relevante Komponentenbetriebsparameter hinterlegt, wobei in der Art einer Messwerterfassung kontinuierliche Umgebungsbedingungen wie beispielsweise Luftdruck, Lufttemperatur, Luftfeuchte der zu überwachenden Bauteile sowie deren Temperaturen und Drücke hinterlegt werden. Die hierfür charakteristischen Messwerte M werden in einer Messwert-Erfassungseinheit 4, die ihrerseits dateneingangsseitig mit den entsprechenden Sensoren verbunden ist, ermittelt und bedarfsweise auf der Speichereinrichtung 2 abgespeichert.

Des Weiteren übergibt die Messwert-Erfassungseinheit 4 die ermittelten Daten aber auch an eine Auswerteeinheit 6, in der bedarfsweise Ermüdungskennwerte für die jeweiligen Bauteile oder Komponenten ermittelt werden. Die Auswerteeinheit 6 ist dabei aber nicht nur dafür ausgelegt, einen aktuellen Istzustand für die jeweilige Bauteilermüdung zu ermitteln, sondern die Auswerteeinheit 6 ermittelt zusätzlich für die oder jede ausgewählte Komponente noch einen zugeordneten Ermüdungs-Prognosewert, der unter Zugrundelegung eines vorgesehenen Zustandswechsels wie beispielsweise eines Lastwechselvorgangs oder dergleichen ausgehend vom aktuellen Ermüdungszustand der jeweiligen Komponente deren erwarteten Ermüdungszustand nach Durchführung des jeweiligen Zustandswechsels beschreibt.

Um eine derartige Prognose für eine erwartete Ermüdung der oder jeder Bauteile durchführen zu können, umfasst das Leitsystem 1 eine Eingabeeinheit 8, über die für die jeweils zu analysierenden Zustandswechsel charakteristische Zielparameter E eingegeben werden können. Insbesondere wird bei der Analyse eines Lastwechsels dabei die einzustellende Kraftwerksleistung und die für die Erreichung des vorgesehenen Leistungsniveaus zur Verfügung gestellte Zeitspanne eingegeben.

Die Messwert-Erfassungseinheit 4 und die Eingabeeinheit 8 sind datenausgangsseitig an ein erstes Simulationsmodul 10 der Auswerteeinheit 6 angeschlossen. Im ersten Simulationsmodul 10 werden aus den gemessenen Umgebungsbedingungen und den Anlagenbetriebsparametern sowie den in der Eingabeeinheit 8 eingegebenen Zielparametern für den auszuwertenden Zustands- oder Lastwechsel zunächst das für das Erreichen der jeweiligen Zielparameter erforderliche Einsatzprogramm für die Kraftwerksanlage und ein Trendverlauf der relevanten Prozessparameter wie beispielsweise Drücke, Temperaturen und Durchsätze vorausberechnet. Dabei wird eine thermodynamische Simulation und/oder ein thermodynamisches Modell des Kraftwerks berücksichtigt, wobei das thermodynamische Modell im ersten Simulationsmodul 10 hinterlegt ist. Die thermodynamische Simulation im ersten Simulationsmodul 10 liefert als Ergebnis dabei neben anderen Parametern insbesondere die Trendverläufe von Drücken und Medientemperaturen in den zu überwachenden Bauteilen oder Komponenten.

Die Ergebnisse werden an ein zweites Simulationsmodul 12 übergeben, in dem aus den Trendverläufen für Drücke und Temperaturen in der jeweiligen Komponente oder im jeweiligen Bauteil die Trendverläufe der Wandinnen- und Wandmittentemperaturen für die zu überwachenden Bauteile bestimmt werden. Dies erfolgt unter Rückgriff auf Konstruktions- und Materialparameter, die in der Speichereinrichtung 2 bereitgehalten sind.

In einem nachfolgenden dritten Simulationsmodul 14 werden anhand der ermittelten Temperaturen und Drücke in den Bauteilen oder Komponenten die Spannungsverläufe in den Bauteilwänden ermittelt, wobei bedarfsweise ebenfalls ein Rückgriff auf in der Speichereinrichtung 2 hinterlegte bauteilspezifische Parameter oder Datensätze erfolgt.

In einem nachfolgenden vierten Simulationsmodul 16 wird aus den ermittelten Spannungsverläufen für jedes zu überwachende Bauteil oder jede zu überwachende Komponente ein zu erwartender Ermüdungsbeitrag für den zu analysierenden Zustands- oder Lastwechsel ermittelt. In einem nachfolgenden fünften Simulationsmodul 18 wird schließlich dasjenige Bauteil oder diejenige Komponente ermittelt, für das/die die Summe aus aktuellem Ermüdungskennwert, der in der Speichereinrichtung 2 bereitgehalten wird, und dem im vorangegangenen vierten Simulationsmodul 16 ermittelten, auf den auszuwertenden Zustands-oder Lastwechsel zurückzuführenden zusätzlichen Ermüdungsbeitrag am größten ist. Dieses Bauteil oder diese Komponente wird als "führende Komponente" identifiziert und bei nachfolgenden Auswertungen als relevantes Bauteil zugrunde gelegt. Der Ermüdungs-Prognosewert der führenden Komponente wird als erwarteter Ermüdungsbeitrag für die Anlage insgesamt angesehen und beispielsweise in einer Ausgabeeinheit 20 für eine weitere Auswertung oder auch zur Information des Bedienpersonals ausgegeben.

Bei geeigneter Ermittlung verschiedenartiger Ermüdungs-Prognosekennwerte kann somit beispielsweise ein Wartungs- oder Reparatureingriff besonders bedarfsgerecht geplant werden, indem die erwartete Ermüdung der führenden Komponente mit den zugelassenen oder als zulässig erachteten Grenzwerten geeignet verglichen wird. Zusätzlich oder alternativ kann aber auch in der Art einer Szenarienplanung eine Mehrzahl verschiedenartiger Zustands- oder Lastwechsel simuliert werden, wobei anhand der ermittelten Ermüdungs-Prognosewerte dasjenige Lastwechselszenario ausgewählt und für den weiteren Betrieb der Anlage herangezogen wird, das zur geringsten Zusatzbelastung der Bauteile führt.

## Patentansprüche

1. Verfahren zum Betreiben einer großtechnischen Anlage, insbesondere einer Kraftwerksanlage, bei dem eine Anzahl von für den jeweiligen Betriebszustand der technischen Anlage charakteristischen Anlagenbetriebsparametern und für eine Anzahl ausgewählter Komponenten der technischen Anlage jeweils eine Anzahl von für die jeweilige Komponente relevanten Komponentenbetriebsparametern überwacht und in einer Speichereinrichtung (2) hinterlegt werden, wobei für die oder jede ausgewählte Komponente bedarfsweise anhand der gespeicherten Anlagenbetriebsparameter und/oder der gespeicherten zugeordneten Komponentenbetriebsparameter ein für den aktuellen Ermüdungszustand der jeweiligen Komponente charakteristischer Ermüdungskennwert ermittelt wird,
**dadurch gekennzeichnet, dass**
ausgehend vom für den aktuellen Ermüdungszustand charakteristischen Ermüdungskennwert für die oder jede ausgewählte Komponente unter Zugrundelegung von für einen vorgesehenen Zustandswechsel charakteristischen Führungsparametern jeweils ein zugeordneter Ermüdungs-Prognosewert ermittelt wird.

2. Verfahren nach Anspruch 1, bei dem die Komponentenbetriebsparameter Kennwerte für Umgebungsdruck, Umgebungstemperatur und/oder Umgebungsfeuchte der jeweiligen Komponente umfassen.

3. Verfahren nach Anspruch 1 oder 2, bei dem die Anlagenbetriebsparameter Kennwerte für einen Anlagenschaltungszustand und/oder eine Sollleistung umfassen.

4. Verfahren nach einem der Ansprüche 1 bis 3, bei dem bei der Ermittlung des jeweiligen Ermüdungskennwerts und/oder des jeweiligen Ermüdungs-Prognosewerts für die jeweilige Komponente charakteristische Komponentenparameter berücksichtigt werden.

5. Verfahren nach Anspruch 4, bei dem die Komponentenparameter Werkstoffdaten, geometrische Abmessungen der jeweiligen Komponente und/oder Positionsdaten der für die Ermüdungsberechnung relevanten Temperatur- und/oder Druckmessstellen umfassen.

6. Verfahren nach einem der Ansprüche 1 bis 5, bei dem zur Ermittlung des jeweiligen Ermüdungs-Prognosewerts Trendverläufe für Temperatur- und/oder Druckwerte innerhalb der jeweiligen Komponente berücksichtigt werden.

7. Verfahren nach Anspruch 6, bei dem die Trendverläufe aus einer thermodynamischen Simulation der Anlage bestimmt werden.

8. Verfahren nach einem der Ansprüche 1 bis 7, bei dem diejenige Komponente mit dem größten ermittelten Ermüdungs-Prognosewerte als führende Komponente identifiziert wird.

9. Verfahren nach Anspruch 8, bei dem der Ermüdungs-Prognosewert der führenden Komponente als Kriterium für die Einleitung von Reparatur- oder Wartungsmaßnahmen verwendet wird.

10. Verfahren nach Anspruch 8 oder 9, bei dem für eine Mehrzahl vorgesehener Zustandswechsel jeweils ein Ermüdungs-Prognosewert der führenden Komponente ermittelt wird, wobei anhand der ermittelten Ermüdungs-Prognosewerte einer der Zustandswechsel ausgewählt und veranlasst wird.

11. Verfahren nach einem der Ansprüche 1 bis 9, bei dem für eine Mehrzahl vorgesehener Zustandswechsel jeweils ein Satz von Ermüdungs-Prognosewerten ermittelt wird, wobei anhand der ermittelten Ermüdungs-Prognosewerte einer der Zustandswechsel ausgewählt und veranlasst wird.

12. Leitsystem (1) für eine großtechnische Anlage, insbesondere eine Kraftwerksanlage, mit einer Speichereinrichtung (2), in der eine Anzahl von für den jeweiligen Betriebszustand der technischen Anlage charakteristischen Anlagenbetriebsparametern und eine Anzahl von für eine Anzahl ausgewählter Komponenten der technischen Anlage relevanten Komponentenbetriebsparametern hinterlegt werden und die datenseitig mit einer Auswerteeinheit (6) verbunden ist, die für die bedarfsweise Ermittlung jeweils eines für den aktuellen Ermüdungszustand der oder jeder ausgewählten Komponente charakteristischen Ermüdungskennwerts anhand der gespeicherten Anlagenbetriebsparameter und/oder der gespeicherten zugeordneten Komponentenbetriebsparameter ausgelegt ist,
**dadurch gekennzeichnet, dass**
die Auswerteeinheit (6) für die oder jede ausgewählte Komponente für eine Ermittlung eines zugeordneten Ermüdungs-Prognosewerts ausgehend vom für den aktuellen Ermüdungszustand charakteristischen Ermüdungskennwert unter Zugrundelegung von für einen vorgesehenen Zustandswechsel charakteristischen Führungsparametern ausgelegt ist.
